# EUROPEAN PATENT APPLICATION

(11) **EP 4 319 323 A1**
(43) Date of publication of application: **07.02.2024**
(21) Application number: 21933686.4
(22) Date of filing: 30.03.2021
(51) Int. Cl.: H04W 52/04

(54) **METHOD AND APPARATUS FOR DETERMINING POWER PARAMETER**

(71) Applicant: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2021/084145
(87) International publication number: WO 2022/205006

(57) **Abstract**

The present application provides a method and apparatus for determining a power parameter. The method is executed by a terminal device. The method comprises: obtaining power control information of a physical uplink shared channel (PUSCH); and determining, according to the power control information, a power adjustment value corresponding to the transmission power of the PUSCH. In the present application, the power control information of the PUSCH is obtained, and the power adjustment value corresponding to the transmission power of the PUSCH is determined according to the power control information. Thus, the terminal device can determine, according to the power control information, a power adjustment value corresponding to the transmission power of the PUSCH, so that the transmission power of the PUSCH can be adjusted according to the power adjustment value corresponding to the transmission power of the PUSCH, and the transmission power of the PUSCH can be flexibly and accurately adjusted, thereby ensuring the transmission reliability of the terminal device in the PUSCH, and facilitating the reduction of the energy consumption of the terminal device.

## Description

### FIELD

The present invention relates to a technical field of communication, and more particularly to a method and an apparatus for determining a power parameter.

### BACKGROUND

At present, when being in an idle state or an inactive state, a terminal device may send data to a network device by a Msg3 of a 4-step random access process of an initial access, a MsgA of a 2-step random access process of an initial access, or a physical uplink shared channel (PUSCH) configured by the network device. In the related art, problems such as a low reliability of transmission on the PUSCH from the terminal device and a high power consumption of the terminal device still exi st.

### SUMMARY

A method and an apparatus for determining a power parameter are provided by embodiments of the present invention, which are capable of solving problems in the related art that a reliability of transmission of a terminal device on a PUSCH is low and a power consumption of the terminal device is relatively high.

In a first aspect, a method for determining a power parameter is provided by embodiments of the present invention. The method is performed by a terminal device and includes: obtaining power control information of a physical uplink shared channel (PUSCH); and determining a power adjustment value corresponding to a transmitting power of the PUSCH according to the power control information.

According to the method for determining the power parameter provided by the present invention, the power control information of the PUSCH is obtained, and the power adjustment value corresponding to the transmitting power of the PUSCH is determined according to the power control information. Therefore, the terminal device may determine the power adjustment value corresponding to the transmitting power of the PUSCH according to the power control information, and the transmitting power of the PUSCH may be adjusted according to the power adjustment value corresponding to the transmitting power of the PUSCH. The transmitting power of the PUSCH may be flexibly and accurately adjusted, which improves the reliability of the transmission on the PUSCH of the terminal device, and reduces the power consumption of the terminal device.

In an implementation manner, obtaining the power control information of the PUSCH includes: receiving the power control information of the PUSCH sent by a network device; or obtaining the power control information of the PUSCH according to a protocol agreement.

In an implementation manner, the PUSCH is a PUSCH for a configure grant small data transmission.

In an implementation manner, the power control information includes at least one selected from: signal information configured to calculate a path loss compensation power value; configuration information of an initial power component value; indication information of whether to allow a cumulative power adjustment; and configuration information of a dynamic power added value.

In an implementation manner, the power adjustment value includes at least one selected from: a path loss compensation power value; an initial power component value; a dynamic power adjustment value, the dynamic power adjustment value including an accumulated power value or an absolute power value; and a dynamic power added value.

In an implementation manner, the signal information configured to calculate the path loss compensation power value includes at least one selected from: a synchronous signal block (SSB); a reference signal associated with the PUSCH; and a reference signal having a quasi-colocation relationship with the PUSCH.

In an implementation manner, the configuration information of the initial power component value includes at least one selected from: a nominal power component value configured by the network device; a terminal-specific power component value configured by the network device; an initial power component value configured by the network device; a nominal power component value used in a previous random access procedure; an initial power component value used in the previous random access procedure; a nominal power component value used in a current random access procedure; and an initial power component value used in the current random access procedure.

In an implementation manner, the indication information of whether to allow the cumulative power adjustment includes: an indication bit configured to indicate that a cumulative power adjustment value or an absolute power adjustment value is adopted.

In an implementation manner, the configuration information of the dynamic power added value includes at least one selected from: a power value added per time; and a maximum number of power additions.

In an implementation manner, the indication information of whether to allow the cumulative power adjustment is indication information of allowing the cumulative power adjustment, and the indication information of allowing the cumulative power adjustment is configured to indicate that the cumulative power adjustment is configured for the PUSCH for the configure grant small data transmission.

In an implementation manner, determining the path loss compensation power value includes: determining the path loss compensation power value according to a path loss value measured with a reference signal corresponding to an identifier of a reference signal configured to calculate the path loss compensation power value.

In an implementation manner, determining the absolute power value includes: determining the absolute power value according to a transmission power control (TPC) command of the network device.

In an implementation manner, determining the accumulated power value includes: determining the accumulated power value according to a sum value of a dynamic power adjustment value of a previous transmission and an absolute power value of a current transmission.

In an implementation manner, the method further includes: performing a rollback process on the dynamic power adjustment value when a first preset condition is satisfied.

In an implementation manner, the first preset condition includes at least one selected from: receiving a connection release message; receiving a connection refused message; receiving indication information of entering an idle state; and receiving feedback information of successfully receiving data sent by the network device.

In an implementation manner, determining the dynamic power added value includes: determining the dynamic power added value according to a product of the power value added per time and a number of the power additions.

In an implementation manner, the method further includes: determining the dynamic power added value when a second preset condition is satisfied.

In an implementation manner, the second preset condition includes retransmitting transmitted data.

In an implementation manner, retransmitting the transmitted data includes at least one selected from: retransmitting the transmitted data on a PUSCH with a same configure grant (CG) resource as a previous transmission; retransmitting the transmitted data by using a same hybrid automatic repeat request (HARQ) process as the previous transmission; and retransmitting the transmitted data by using the same HARQ process as the previous transmission on the PUSCH with the same CG resource as the previous transmission.

In an implementation manner, the method further includes: performing the rollback process on the dynamic power added value when a third preset condition is satisfied.

In an implementation manner, the third preset condition includes at least one selected from: receiving a connection release message; receiving a connection refused message; receiving indication information of entering an idle state; and receiving feedback information of successfully receiving data sent by the network device.

In a second aspect, a method for determining a power parameter is provided by embodiments of the present invention. The method is performed by a network device and includes: transmitting power control information of a physical uplink shared channel (PUSCH) to a terminal device, in which the power control information is configured to determine a power adjustment value corresponding to a transmitting power of the PUSCH.

According to the method for determining the power parameter provided by the present invention, the power control information of the PUSCH is sent to the terminal device, and the power control information is configured to determine the power adjustment value corresponding to the transmitting power of the PUSCH. Therefore, the network device may send the power control information of the PUSCH to the terminal device, and the power control information is configured to determine the power adjustment value corresponding to the transmitting power of the PUSCH, and thus the terminal device may adjust the transmitting power of the PUSCH according to the power adjustment value corresponding to the transmitting power of the PUSCH. The transmitting power of the PUSCH may be flexibly and accurately adjusted, which improves the reliability of the transmission on the PUSCH of the terminal device, and reduces the power consumption of the terminal device.

In an implementation manner, the PUSCH is a PUSCH for a configure grant small data transmission.

In an implementation manner, the power control information includes at least one selected from: signal information configured to calculate a path loss compensation power value; configuration information of an initial power component value; indication information of whether to allow a cumulative power adjustment; and configuration information of a dynamic power added value.

In an implementation manner, the power adjustment value includes at least one selected from: a path loss compensation power value; an initial power component value; a dynamic power adjustment value, the dynamic power adjustment value including an accumulated power value or an absolute power value; and a dynamic power added value.

In an implementation manner, the signal information configured to calculate the path loss compensation power value includes at least one selected from: a synchronous signal block (SSB); a reference signal associated with the PUSCH; and a reference signal having a quasi-colocation relationship with the PUSCH.

In an implementation manner, the configuration information of the initial power component value includes at least one selected from: a configured nominal power component value; a configured terminal-specific power component value; a configured initial power component value; a nominal power component value used in a previous random access procedure; an initial power component value used in the previous random access procedure; a nominal power component value used in a current random access procedure; and an initial power component value used in the current random access procedure.

In an implementation manner, the indication information of whether to allow the cumulative power adjustment includes: an indication bit configured to indicate that a cumulative power adjustment value or an absolute power adjustment value is adopted.

In an implementation manner, the configuration information of the dynamic power added value includes at least one selected from: a power value added per time; and a maximum number of power additions.

In an implementation manner, the indication information of whether to allow the cumulative power adjustment is indication information of allowing the cumulative power adjustment, and the indication information of allowing the cumulative power adjustment is configured to indicate that the cumulative power adjustment is configured for the PUSCH for the configure grant small data transmission.

In an implementation manner, the path loss compensation power value is determined according to a path loss value measured with a reference signal corresponding to an identifier of a reference signal configured to calculate the path loss compensation power value.

In an implementation manner, the absolute power value is determined according to a transmission power control (TPC) command of the network device.

In an implementation manner, the accumulated power value is determined according to a sum value of a dynamic power adjustment value of a previous transmission and an absolute power value of a current transmission.

In an implementation manner, the terminal device satisfies a first preset condition, and the dynamic power adjustment value is a value after performing a rollback process.

In an implementation manner, the first preset condition includes at least one selected from: receiving a connection release message; receiving a connection refused message; receiving indication information of entering an idle state; and receiving feedback information of successfully receiving data sent by the network device.

In an implementation manner, the dynamic power added value is determined according to a product of the power value added per time and a number of the power additions.

In an implementation manner, the dynamic power added value is determined when the terminal device satisfies a second preset condition.

In an implementation manner, the second preset condition includes retransmitting transmitted data.

In an implementation manner, retransmitting the transmitted data includes at least one selected from: retransmitting the transmitted data on a PUSCH with a same configure grant (CG) resource as a previous transmission; retransmitting the transmitted data by using a same hybrid automatic repeat request (HARQ) process as the previous transmission; and retransmitting the transmitted data by using the same HARQ process as the previous transmission on the PUSCH with the same CG resource as the previous transmission.

In an implementation manner, the terminal device satisfies a third preset condition, and the dynamic power added value is the value after performing the rollback process.

In an implementation manner, the third preset condition includes at least one selected from: receiving a connection release message; receiving a connection refused message; receiving indication information of entering an idle state; and receiving feedback information of successfully receiving data sent by the network device.

In a third aspect, an apparatus for determining a power parameter is provided by embodiments of the present invention, including: a transceiving module configured to obtain power control information of a physical uplink shared channel (PUSCH); and a processing module configured to determine a power adjustment value corresponding to a transmitting power of the PUSCH according to the power control information.

The apparatus for determining the power parameter provided by the present invention obtains the power control information of the PUSCH, and determines the power adjustment value corresponding to the transmitting power of the PUSCH according to the power control information. Therefore, the terminal device may determine the power adjustment value corresponding to the transmitting power of the PUSCH according to the power control information, and the transmitting power of the PUSCH may be adjusted according to the power adjustment value corresponding to the transmitting power of the PUSCH. The transmitting power of the PUSCH may be flexibly and accurately adjusted, which improves the reliability of the transmission on the PUSCH of the terminal device, and reduces the power consumption of the terminal device.

In an implementation manner, the transceiving module is specifically configured to: receive the power control information of the PUSCH sent by a network device; or obtain the power control information of the PUSCH according to a protocol agreement.

In an implementation manner, the PUSCH is a PUSCH for a configure grant small data transmission.

In an implementation manner, the power control information includes at least one selected from: signal information configured to calculate a path loss compensation power value; configuration information of an initial power component value; indication information of whether to allow a cumulative power adjustment; and configuration information of a dynamic power added value.

In an implementation manner, the power adjustment value includes at least one selected from: a path loss compensation power value; an initial power component value; a dynamic power adjustment value, the dynamic power adjustment value including an accumulated power value or an absolute power value; and a dynamic power added value.

In an implementation manner, the signal information configured to calculate the path loss compensation power value includes at least one selected from: a synchronous signal block (SSB); a reference signal associated with the PUSCH; and a reference signal having a quasi-colocation relationship with the PUSCH.

In an implementation manner, the configuration information of the initial power component value includes at least one selected from: a nominal power component value configured by the network device; a terminal-specific power component value configured by the network device; an initial power component value configured by the network device; a nominal power component value used in a previous random access procedure; an initial power component value used in the previous random access procedure; a nominal power component value used in a current random access procedure; and an initial power component value used in the current random access procedure.

In an implementation manner, the indication information of whether to allow the cumulative power adjustment includes: an indication bit configured to indicate that a cumulative power adjustment value or an absolute power adjustment value is adopted.

In an implementation manner, the configuration information of the dynamic power added value includes at least one selected from: a power value added per time; and a maximum number of power additions.

In an implementation manner, the indication information of whether to allow the cumulative power adjustment is indication information of allowing the cumulative power adjustment, and the indication information of allowing the cumulative power adjustment is configured to indicate that the cumulative power adjustment is configured for the PUSCH for the configure grant small data transmission.

In an implementation manner, the processing module is specifically configured to: determine the path loss compensation power value according to a path loss value measured with a reference signal corresponding to an identifier of a reference signal configured to calculate the path loss compensation power value.

In an implementation manner, the processing module is specifically configured to: determine the absolute power value according to a transmission power control (TPC) command of the network device.

In an implementation manner, the processing module is specifically configured to: determine the accumulated power value according to a sum value of a dynamic power adjustment value of a previous transmission and an absolute power value of a current transmission.

In an implementation manner, the processing module is specifically configured to: perform a rollback process on the dynamic power adjustment value when a first preset condition is satisfied.

In an implementation manner, the first preset condition includes at least one selected from: receiving a connection release message; receiving a connection refused message; receiving indication information to enter an idle state; and receiving feedback information of successfully receiving data sent by the network device.

In an implementation manner, the processing module is specifically configured to: determine the dynamic power added value according to a product of the power value added per time and a number of the power additions.

In an implementation manner, the processing module is specifically configured to: determine the dynamic power added value when a second preset condition is satisfied.

In an implementation manner, the second preset condition includes retransmitting transmitted data.

In an implementation manner, retransmitting the transmitted data includes at least one of: retransmitting the transmitted data on a PUSCH with a same configure grant (CG) resource as a previous transmission; retransmitting the transmitted data by using a same hybrid automatic repeat request (HARQ) process as the previous transmission; and retransmitting the transmitted data by using the same HARQ process as the previous transmission on the PUSCH with the same CG resource as the previous transmission.

In an implementation manner, the processing module is specifically configured to: perform the rollback process on the dynamic power added value when a third preset condition is satisfied.

In an implementation manner, the third preset condition includes at least one selected from: receiving a connection release message; receiving a connection refused message; receiving indication information of entering the idle state; and receiving feedback information of successfully receiving data sent by the network device.

In a fourth aspect, an apparatus for determining a power parameter is provided by embodiments of the present invention, including: a transceiving module configured to send power control information of a physical uplink shared channel (PUSCH) to a terminal device, in which the power control information is configured to determine a power adjustment value corresponding to a transmitting power of the PUSCH.

The apparatus for determining the power parameter provided by the present invention sends the power control information of the PUSCH to the terminal device, and the power control information is configured to determine the power adjustment value corresponding to the transmitting power of the PUSCH. Therefore, the network device may send the power control information of the PUSCH to the terminal device, and the power control information is configured to determine the power adjustment value corresponding to the transmitting power of the PUSCH, and thus the terminal device may adjust the transmitting power of the PUSCH according to the power adjustment value corresponding to the transmitting power of the PUSCH. The transmitting power of the PUSCH may be flexibly and accurately adjusted, which improves the reliability of the transmission on the PUSCH of the terminal device, and reduces the power consumption of the terminal device.

In an implementation manner, the PUSCH is a PUSCH for a configure grant small data transmission.

In an implementation manner, the power control information includes at least one selected from: signal information configured to calculate a path loss compensation power value; configuration information of an initial power component value; indication information of whether to allow a cumulative power adjustment; and configuration information of a dynamic power added value.

In an implementation manner, the power adjustment value includes at least one selected from: a path loss compensation power value; an initial power component value; a dynamic power adjustment value, the dynamic power adjustment value including an accumulated power value or an absolute power value; and a dynamic power added value.

In an implementation manner, the signal information configured to calculate the path loss compensation power value includes at least one selected from: a synchronous signal block (SSB); a reference signal associated with the PUSCH; and a reference signal having a quasi-colocation relationship with the PUSCH.

In an implementation manner, the configuration information of the initial power component value includes at least one selected from: a configured nominal power component value; a configured terminal-specific power component value; a configured initial power component value; a nominal power component value used in a previous random access procedure; an initial power component value used in the previous random access procedure; a nominal power component value used in a current random access procedure; and an initial power component value used in the current random access procedure.

In an implementation manner, the indication information of whether to allow the cumulative power adjustment includes: an indication bit configured to indicate that a cumulative power adjustment value or an absolute power adjustment value is adopted.

In an implementation manner, the configuration information of the dynamic power added value includes at least one selected from: a power value added per time; and a maximum number of power additions.

In an implementation manner, the indication information of whether to allow the cumulative power adjustment is indication information of allowing the cumulative power adjustment, and the indication information of allowing the cumulative power adjustment is configured to indicate that the cumulative power adjustment is configured for the PUSCH for the configure grant small data transmission.

In an implementation manner, the path loss compensation power value is determined according to a path loss value measured with a reference signal corresponding to an identifier of a reference signal configured to calculate the path loss compensation power value.

In an implementation manner, the absolute power value is determined according to a transmission power control (TPC) command of the network device.

In an implementation manner, the accumulated power value is determined according to a sum value of a dynamic power adjustment value of a previous transmission and a currently transmitted absolute power value.

In an implementation manner, the terminal device satisfies a first preset condition, and the dynamic power adjustment value is a value after performing a rollback process.

In an implementation manner, the first preset condition includes at least one selected from: receiving a connection release message; receiving a connection refused message; receiving indication information of entering an idle state; and receiving feedback information of successfully receiving data sent by the network device.

In an implementation manner, the dynamic power added value is determined according to a product of the power value added per time and a number of the power additions.

In an implementation manner, the dynamic power added value is determined when the terminal device satisfies a second preset condition.

In an implementation manner, the second preset condition includes retransmitting transmitted data.

In an implementation manner, retransmitting the transmitted data includes at least one of: retransmitting the transmitted data on a PUSCH with a same configure grant (CG) resource as a previous transmission; retransmitting the transmitted data by using a same hybrid automatic repeat request (HARQ) process as the previous transmission; and retransmitting the transmitted data by using the same HARQ process as the previous transmission on the PUSCH with the same CG resource as the previous transmission.

In an implementation manner, the terminal device satisfies a third preset condition, and the dynamic power added value is the value after performing the rollback process.

In an implementation manner, the third preset condition includes at least one selected from: receiving a connection release message; receiving a connection refused message; receiving indication information of entering an idle state; and receiving feedback information of successfully receiving data sent by the network device.

In a fifth aspect, embodiments of the present invention provide a communication device, which includes a processor that, when invokes a computer program stored in a memory, executes the method according to the first aspect above.

In a sixth aspect, embodiments of the present invention provide a communication device, which includes a processor that, when invokes a computer program stored in a memory, executes the method according to the second aspect above.

In a seventh aspect, embodiments of the present invention provide a communication device, which includes a processor and a memory having stored therein a computer program. The processor is configured to execute the computer program stored in the memory, to cause the communication device to implement the method according to the first aspect above.

In an eighth aspect, embodiments of the present invention provide a communication device, which includes a processor and a memory having stored therein a computer program. The processor is configured to execute the computer program stored in the memory, to cause the communication device to implement the method according to the second aspect above.

In a ninth aspect, embodiments of the present invention provide a communication device, which includes a processor and an interface circuit. The interface circuit is configured to receive code instructions and transmit the code instructions to the processor, and the processor is configured to run the code instructions to implement the method according to the first aspect above.

In a tenth aspect, embodiments of the present invention provide a communication device, which includes a processor and an interface circuit. The interface circuit is configured to receive code instructions and transmit the code instructions to the processor, and the processor is configured to run the code instructions to implement the method according to the second aspect above.

In an eleventh aspect, embodiments of the present invention provide a communication system, which includes the apparatus for determining the power parameter according to the third aspect and the apparatus for determining the power parameter according to the fourth aspect, or includes the communication device according to the fifth aspect and the communication device according to the sixth aspect, or includes the communication device according to the seventh aspect and the communication device according to the eighth aspect, or includes the communication device according to the ninth aspect and the communication device according to the tenth aspect.

In a twelfth aspect, embodiments of the present invention provide a computer-readable storage medium for storing instructions that, when executed, cause the method according to the first aspect above to be implemented.

In a thirteenth aspect, embodiments of the present invention provide a computer-readable storage medium for storing instructions that, when executed, cause the method according to the second aspect above to be implemented.

In a fourteenth aspect, the present invention further provides a computer program product including a computer program that, when run on a computer, causes the computer to implement the method according to the first aspect above.

In a fifteenth aspect, the present invention further provides a computer program product including a computer program that, when run on a computer, causes the computer to implement the method according to the second aspect above.

In a sixteenth aspect, the present invention provides a chip system, which includes at least one processor and an interface, for supporting a terminal device to implement functions involved in the first aspect, for example, determining or processing at least one of data and information involved in the above method. In a possible design, the chip system further includes a memory for storing necessary computer programs and data of the terminal device. The chip system may consist of chips, or may include a chip and other discrete devices.

In a seventeenth aspect, the present invention provides a chip system, which includes at least one processor and an interface, for supporting a network device to implement functions involved in the second aspect, for example, determining or processing at least one of data and information involved in the above method. In a possible design, the chip system further includes a memory for storing necessary computer programs and data of the network device. The chip system may consist of chips, or may include a chip and other discrete devices.

In an eighteenth aspect, the present invention provides a computer program that, when run on a computer, causes the computer to implement the method according to the first aspect above.

In a nineteenth aspect, the present invention provides a computer program that, when run on a computer, causes the computer to implement the method according to the second aspect above.

### BRIEF DESCRIPTION OF THE DRAWINGS

In order to clearly describe the technical solutions in embodiments of the present invention or the background technology, drawings used for embodiments of the present invention or the background technology will be described below.
FIG. 1 is an architecture diagram of a communication system provided by embodiments of the present invention;
FIG. 2 is a flowchart of a method for determining a power parameter provided by embodiments of the present invention;
FIG. 3 is a schematic diagram illustrating a method for determining a power parameter provided by embodiments of the present invention;
FIG. 4 is a flowchart of a method for determining a power parameter provided by further embodiments of the present invention;
FIG. 5 is a schematic diagram illustrating a method for determining a power parameter provided by further embodiments of the present invention;
FIG. 6 is a flowchart of a method for determining a power parameter provided by further embodiments of the present invention;
FIG. 7 is a schematic diagram of an apparatus for determining a power parameter provided by embodiments of the present invention;
FIG. 8 is a schematic diagram of an apparatus for determining a power parameter provided by further embodiments of the present invention;
FIG. 9 is a schematic diagram of a communication device of an embodiment of the present invention;
FIG. 10 is a schematic diagram of a chip of an embodiment of the present invention.

### DETAILED DESCRIPTION

Embodiments of the present invention will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present invention, and are not construed to limit embodiments of the present invention.

For ease of understanding, terms involved in the present invention are introduced as follows.
1. Physical Uplink Shared Channel (PUSCH). As a main channel carrying uplink data of a physical layer, the PUSCH is configured for scheduling and transmitting the uplink data, and may carry control information, user service information and broadcast service information, etc.
2. Transmit Power Control (TPC). A TPC command is used by two communication parties, i.e., by one communication party to request the other party to increase or decrease a transmission power, and a step size may be adjusted from 1 to 3 dB.
3. Synchronous Signal Block (SSB). In the new radio (NR), the SSB is constituted by a primary synchronization signal (PSS), a secondary synchronization signal (SSS), and a physical broadcast channel (PBCH) together.
4. Quasi-CoLocation (QCL). If a channel characteristic for a symbol of an antenna port can be derived from another antenna port, it is determined that the two ports have a QCL relationship, and a channel estimation result obtained from one port may be used for the other ports.

In order to better understand a method for determining a power parameter provided by embodiments of the present invention, a communication system used in the embodiments of the present invention is described below.

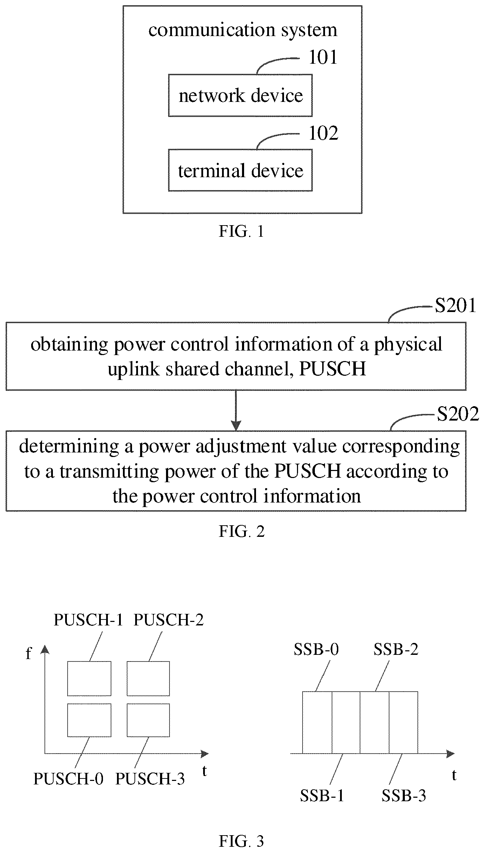

As shown in FIG. 1, FIG. 1 is a schematic diagram of a communication system provided by embodiments of the present invention. The communication system may include, but is not limited to, a network device and a terminal device. The number and form of the devices shown in FIG. 1 are only used as an example and do not constitute a limitation on the embodiments of the present invention. The communication system may include two or more network devices, two or more terminal devices in practical applications. As an example for illustration, the communication system shown in FIG. 1 includes a network device 101 and a terminal device 102.

It should be noted that the technical solutions of the embodiments of the present invention may be applied to various communication systems, for example, a long term evolution (LTE) system, a 5th generation (5G) mobile communication system, a 5G new radio (NR) system, or other future new mobile communication systems.

The network device 101 in the embodiments of the present invention is an entity on a network side for sending or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. Embodiments of the present invention do not limit the specific technology and specific device form adopted by the network device. The network device provided by the embodiments of the present invention may be composed of a central unit (CU) and distributed units (DU). The CU may also be called a control unit. Using a CU-DU structure may split a protocol layer of the network device, such as the base station, a part of functions of the protocol layer is centrally controlled in the CU, some or all of the remaining functions of the protocol layer are distributed in the DUs, and the CU centrally controls the DUs.

The terminal device 102 in the embodiments of the present invention is an entity on a user side for receiving or sending signals, such as a mobile phone. The terminal device may also be called a terminal, a user equipment (UE), a mobile station (MS), and a mobile terminal (MT). The terminal device may be a vehicle with a communication function, a smart vehicle, a mobile phone, a wearable device, a tablet pad, a computer with a wireless transceiving function, a virtual reality (VR) terminal device, an augmented reality (AR) terminal device, a wireless terminal device for industrial control, a wireless terminal device for self-driving, a wireless terminal device for a remote medical surgery, a wireless terminal device for a smart grid, a wireless terminal device for transportation safety, a wireless terminal device in a smart city, a wireless terminal device in a smart home, etc. Embodiments of the present invention do not limit the specific technology and the specific device form adopted by the terminal device.

It can be understood that the communication system described in the embodiments of the present invention is intended to illustrate the technical solutions of embodiments of the present invention more clearly, and does not constitute a limitation on the technical solutions provided by the embodiments of the present invention. Those of ordinary skill in the art will know that with an evolution of a system architecture and an occurrence of a new service scenario, the technical solutions provided by the embodiments of the present invention are still applicable to solve similar technical problems.

A method and apparatus for determining a power parameter provided by the present invention will be described in detail below with reference to the accompanying drawings.

FIG. 2 is a flowchart of a method for determining a power parameter provided by embodiments of the present invention, and the method is performed by a terminal device. As shown in FIG. 2, the method for determining the power parameter includes the following steps.

In S201, power control information of a physical uplink shared channel (PUSCH) is obtained.

It should be noted that, in the embodiments of the present invention, a state of the terminal device is not limited, for example, the terminal device may be in an idle state or an inactive state.

It can be understood that the terminal device may send data to the network device via the PUSCH, and a transmitting power of the PUSCH of the terminal device has a relatively large influence on the reliability of the transmission of the PUSCH, and the power consumption of the terminal device.

In embodiments of the present invention, the terminal device may obtain the power control information of the PUSCH.

Optionally, obtaining the power control information of the physical uplink shared channel (PUSCH) includes receiving the power control information of the PUSCH sent by a network device, or obtaining the power control information of the PUSCH according to a protocol agreement.

It can be understood that the network device may pre-configure the power control information of the PUSCH for the terminal device, and send the configured power control information of the PUSCH to the terminal device. Correspondingly, the terminal device may receive the power control information of the PUSCH sent by the network device. Alternatively, a protocol including a content of the power control information of the PUSCH may be pre-agreed, and the terminal device may obtain the power control information of the PUSCH according to the protocol agreement.

Optionally, the PUSCH is a PUSCH for a configure grant small data transmission (CG-SDT).

Optionally, the power control information includes at least one selected from: signal information configured to calculate a path loss compensation power value; configuration information of an initial power component value; indication information of whether to allow a cumulative power adjustment; and configuration information of a dynamic power added value.

Optionally, the signal information configured to calculate the path loss compensation power value includes at least one selected from: a synchronous signal block (SSB); a reference signal associated with the PUSCH; and a reference signal having a quasi-colocation (QCL) relationship with the PUSCH.

In an implementation manner, the signal information configured to calculate the path loss compensation power value includes the SSB. For example, the network device may configure the SSB for the terminal device, and the SSB is configured to measure a path loss value, which may be configured to calculate the path loss compensation power value.

In an implementation manner, the signal information configured to calculate the path loss compensation power value includes the reference signal associated with the PUSCH. It can be understood that different PUSCHs may be associated with different reference signals, and the reference signals may be the SSBs. For example, as shown in FIG. 3, according to the protocol agreement, reference signals SSB-0, SSB-1, SSB-2, and SSB-3 respectively associated with PUSCH-0, PUSCH-1, PUSCH-2, and PUSCH-3 are obtained. When the terminal device uses the PUSCH-1 to transmit data, the SSB-1 associated with the PUSCH-1 is configured to measure the path loss value, and the path loss value is configured to calculate the path loss compensation power value.

In an implementation manner, the signal information configured to calculate the path loss compensation power value includes the reference signal having the quasi-colocation relationship with the PUSCH. It can be understood that the different PUSCHs correspond to different reference signals in the quasi-colocation relationship, and the reference signals may be the SSBs. For example, still referring to FIG. 3, reference signals SSB-0, SSB-1, SSB-2, and SSB-3 respectively having quasi-colocation relationships with the PUSCH-0, the PUSCH-1, the PUSCH-2, and the PUSCH-3 are obtained. When the terminal device uses the PUSCH-1 to transmit data, the SSB-1 having the quasi-colocation relationship with the PUSCH-1 is configured to measure the path loss value, and the path loss value is configured to calculate the path loss compensation power value.

Optionally, the configuration information of the initial power component value includes at least one selected from: a nominal power component value configured by the network device; a terminal-specific power component value configured by the network device; an initial power component value configured by the network device; a nominal power component value used in a previous random access procedure; an initial power component value used in the previous random access procedure; a nominal power component value used in a current random access procedure; and an initial power component value used in the current random access procedure.

In an implementation manner, the terminal device receives a configuration signaling sent by the network device, and the configuration signaling is configured to configure at least one selected from the nominal power component value, the terminal-specific power component value, and the initial power component value, and thus the configuration information of the initial power component value is obtained according to the configuration signaling.

In an implementation manner, the terminal device has not received the configuration signaling sent by the network device, and at this time the terminal device obtains at least one selected from the nominal power component value used in the previous random access procedure, the initial power component value used in the previous random access procedure, the nominal power component value used in the current random access procedure, and the initial power component value used in the current random access procedure as the configuration information of the initial power component value. It should be noted that, in the embodiments of the present invention, the random access procedure is not limited, for example, it includes, but not limited to, a 2-step random access channel (RACH) procedure, and a 4-step RACH procedure.

Optionally, the indication information of whether to allow the cumulative power adjustment includes an indication bit, and the indication bit is configured to indicate that a cumulative power adjustment value or an absolute power adjustment value is adopted. For example, a size of the indication bit may be 1 bit. When the indication bit adopts a value of 0, it indicates that the cumulative power adjustment value is used, and when the indication bit adopts a value of 1, it indicates that the absolute power adjustment value is used.

Optionally, the indication information of whether to allow the cumulative power adjustment is indication information of allowing the cumulative power adjustment, and the indication information of allowing the cumulative power adjustment is configured to indicate that the cumulative power adjustment is configured for the PUSCH for the CG-SDT. In this way, the indication information of allowing the cumulative power adjustment may be defined to be configured to indicate that the cumulative power adjustment is configured for the PUSCH for the CG-SDT.

Optionally, the configuration information of the dynamic power added value includes at least one selected from: a power value added per time; and a maximum number of power additions.

In S202, a power adjustment value corresponding to a transmitting power of the PUSCH is determined according to the power control information.

In the embodiments of the present invention, the terminal device determines the power adjustment value corresponding to the transmitting power of the PUSCH according to the power control information, so as to adjust the transmitting power of the PUSCH according to the power adjustment value corresponding to the transmitting power of the PUSCH.

It can be understood that the terminal device may calculate a power target value of the transmitting power of the PUSCH according to the power control information and a related calculation formula of the transmitting power of the PUSCH, and determines the power adjustment value corresponding to the transmitting power of the PUSCH according to a difference value between a current power value of the transmitting power of the PUSCH and the power target value of the transmitting power of the PUSCH. It should be noted that the related calculation formula of the transmitting power of the PUSCH may be set according to actual conditions, and is not limited herein.

According to the method for determining the power parameter provided by the embodiments of the present invention, the power control information of the PUSCH is obtained, and the power adjustment value corresponding to the transmitting power of the PUSCH is determined according to the power control information. Therefore, the terminal device may determine the power adjustment value corresponding to the transmitting power of the PUSCH according to the power control information, so that the transmitting power of the PUSCH may be adjusted according to the power adjustment value corresponding to the transmitting power of the PUSCH. The transmitting power of the PUSCH may be flexibly and accurately adjusted, which improves the reliability of the transmission on the PUSCH of the terminal device, and reduces the power consumption of the terminal device.

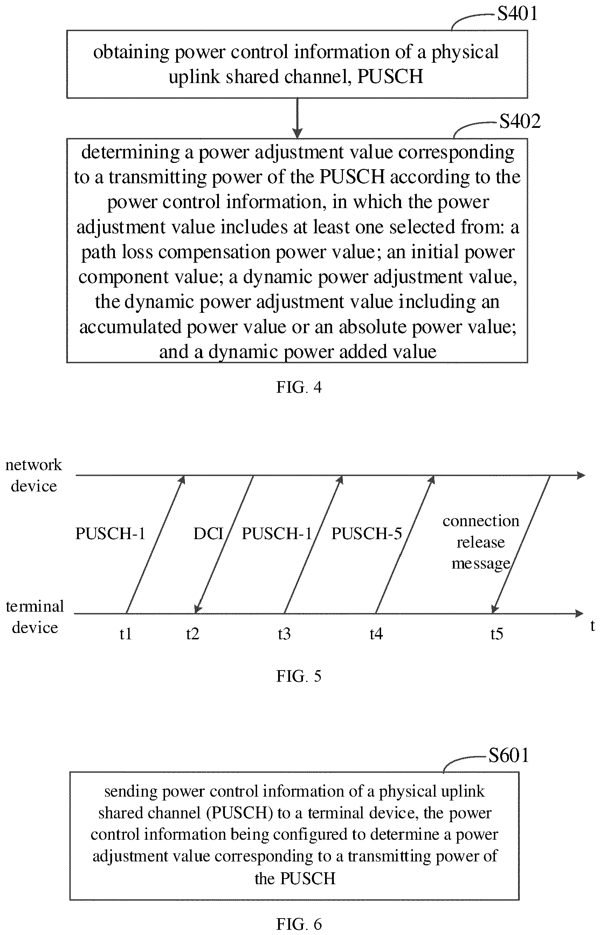

FIG. 4 is a flowchart of a method for determining a power parameter provided by further embodiments of the present invention, and the method is performed by a terminal device. As shown in FIG. 4, the method for determining the power parameter includes the following steps.

In S401, power control information of a physical uplink shared channel (PUSCH) is obtained.

In the embodiments of the present invention, step S401 may be implemented in any one of the embodiments of the present invention, which is not limited in the embodiments of the present invention, and will not be repeated here.

In S402, a power adjustment value corresponding to a transmitting power of the PUSCH is determined according to the power control information. The power adjustment value includes at least one selected from: a path loss compensation power value; an initial power component value; a dynamic power adjustment value, the dynamic power adjustment value including an accumulated power value or an absolute power value; and a dynamic power added value.

In an implementation manner, the determined power adjustment value corresponding to the transmitting power of the PUSCH includes the path loss compensation power value. At this time, the power control information includes signal information configured to calculate the path loss compensation power value, and the path loss compensation power value may be determined according to the signal information configured to calculate the path loss compensation power value.

Optionally, the path loss compensation power value may be determined according to a path loss value measured by a reference signal corresponding to an identifier of a reference signal configured to calculate the path loss compensation power value. It can be understood that the reference signal configured to calculate the path loss compensation power value is configured to measure the path loss value, and the path loss value is configured to calculate the path loss compensation power value. An identifier may be preset for the reference signal configured to calculate the path loss compensation power value, and thus different reference signals configured to calculate the path loss compensation power values can be distinguished from each other. The identifier of the reference signal configured to calculate the path loss compensation power value includes at least one of: an SSB identifier; and a channel state information reference signal (CSI-RS) identifier.

Optionally, determining the path loss compensation power value according to the path loss value measured by the reference signal includes determining a product value of the path loss value measured by the reference signal and a path loss compensation factor as the path loss compensation power value. The path loss compensation factor may be set according to actual conditions, and is not limited herein.

In an implementation manner, the determined power adjustment value corresponding to the transmitting power of the PUSCH includes the initial power component value. At this time, the power control information includes the configuration information of the initial power component value, and the initial power component value may be determined according to the configuration information of the initial power component value. Optionally, the initial power component value included in the configuration information of the initial power component value may be determined as the initial power component value. Alternatively, a sum value of the nominal power component value and the terminal-specific power component value included in the configuration information of the initial power component value may be determined as the initial power component value.

In an implementation manner, the determined power adjustment value corresponding to the transmitting power of the PUSCH includes the dynamic power adjustment value, and the dynamic power adjustment value includes the accumulated power value or the absolute power value. At this time, the power control information includes the indication information of whether to allow a cumulative power adjustment, and the dynamic power adjustment value may be determined according to the indication information of whether to allow the cumulative power adjustment.

Optionally, when the dynamic power adjustment value is determined to be the absolute power value according to the indication information of whether to allow the cumulative power adjustment, the absolute power value may be determined according to a transmit power control (TPC) command of a network device. It can be understood that the network device may send the TPC command to the terminal device, and correspondingly, the terminal device may receive the TPC command and determine the absolute power value according to the TPC command. For example, the TPC command may carry the indication information of the absolute power value, and the indication information includes, but is not limited to, an adjustment value of the absolute power value, and the absolute power value may be determined according to the adjustment value of the absolute power value included in the TPC command.

Optionally, when the dynamic power adjustment value is determined to be the accumulated power value according to the indication information of whether to allow the cumulative power adjustment, the accumulated power value is determined according to a sum value of a dynamic power adjustment value of a previous transmission and an absolute power value of a current transmission.

Optionally, when a first preset condition is satisfied, a rollback process is performed on the dynamic power adjustment value. Performing the rollback process on the dynamic power adjustment value refers to adjusting a dynamic power adjustment value of the current transmission to the dynamic power adjustment value of the previous transmission. The first preset condition may be set according to the actual conditions. For example, the first preset condition includes at least one selected from: receiving a connection release message; receiving a connection refused message; receiving indication information of entering an idle state; and receiving feedback information of successfully receiving data sent by the network device. Therefore, the method may perform the rollback process on the dynamic power adjustment value when the first preset condition is satisfied.

Optionally, when the first preset condition is satisfied, an initialization process is performed on the dynamic power adjustment value. Performing the initialization process on the dynamic power adjustment value refers to setting the dynamic power adjustment value as an initial value. The initial value may be set according to the actual conditions, for example, may be set to 0. Therefore, the method may perform the initialization process on the dynamic power adjustment value when the first preset condition is satisfied.

For example, as shown in FIG. 5, a terminal device sends uplink data to a network device via PUSCH-1 at a moment t1, and starts a feedback receiving timer (such as a feedback timer), and the terminal device receives retransmission scheduling downlink control information (DCI) signaling from the network device for the PUSCH-1 at a moment t2. The DCI signaling carries indication information of a dynamic power adjustment value, and the terminal device determines the dynamic power adjustment value according to the indication information of the dynamic power adjustment value included in the DCI signaling, adopts the determined dynamic power adjustment value to retransmit the data (which has been transmitted via the PUSCH-1) at a moment t3, and adopts the determined dynamic power adjustment value to send uplink data to the network device via PUSCH-5 at a moment t4. At a moment t5, the terminal device receives a connection release message of a radio resource control (RRC) signaling, and performs a rollback process or an initialization process on the dynamic power adjustment value.

In an implementation manner, the determined power adjustment value corresponding to the transmitting power of the PUSCH includes the dynamic power added value. At this time, the power control information includes the configuration information of the dynamic power added value, and the dynamic power added value may be determined according to the configuration information of the dynamic power added value.

Optionally, the dynamic power added value is determined according to a product of a power value added per time and a number of power additions in the configuration information of the dynamic power added value.

Optionally, when a second preset condition is satisfied, the dynamic power added value is determined. Therefore, the method may only determine the dynamic power added value when the second preset condition is satisfied, and at this time, the power adjustment value corresponding to the transmitting power of the PUSCH includes the dynamic power added value. Otherwise, when the second preset condition is not satisfied, the dynamic power added value is not determined, and at this time, the power adjustment value corresponding to the transmitting power of the PUSCH does not include the dynamic power added value.

The second preset condition may be set according to actual conditions, for example, the second preset condition includes retransmitting transmitted data.

Optionally, retransmitting the transmitted data includes at least one selected from: retransmitting the transmitted data on a PUSCH with a same configure grant (CG) resource as a previous transmission; retransmitting the transmitted data by using a same hybrid automatic repeat request (HARQ) process as the previous transmission; and retransmitting the transmitted data by using the same HARQ process as the previous transmission on the PUSCH with the same CG resource as the previous transmission.

Optionally, when a third preset condition is satisfied, a rollback process is performed on the dynamic power added value. Performing the rollback process on the dynamic power added value refers to adjusting a dynamic power added value of a current transmission to a dynamic power added value of a previous transmission. The third preset condition includes at least one selected from: receiving a connection release message; receiving a connection refused message; receiving indication information of entering an idle state; and receiving feedback information of successfully receiving data sent by the network device. Therefore, the method may perform the rollback process on the dynamic power added value when the third preset condition is satisfied.

Optionally, when the third preset condition is satisfied, an initialization process is performed on the dynamic power added value. Performing the initialization process on the dynamic power added value refers to setting the dynamic power added value as an initial value. The initial value may be set according to the actual conditions, for example, may be set to 0. Therefore, the method may perform the initialization process on the dynamic power added value when the third preset condition is satisfied.

According to the method for determining the power parameter in the embodiments of the present invention, the power control information of the PUSCH is obtained, and the power adjustment value corresponding to the transmitting power of the PUSCH is determined according to the power control information. The power adjustment value includes at least one selected from: the path loss compensation power value; the initial power component value; the dynamic power adjustment value, the dynamic power adjustment value including the accumulated power value or the absolute power value; and the dynamic power added value. Therefore, the terminal device may determine the power adjustment value corresponding to the transmitting power of the PUSCH according to the power control information, so that the transmitting power of the PUSCH may be adjusted according to the power adjustment value corresponding to the transmitting power of the PUSCH. The transmitting power of the PUSCH may be flexibly and accurately adjusted, which improves the reliability of the transmission on the PUSCH of the terminal device, and reduces the power consumption of the terminal device.

FIG. 6 is a flowchart of a method for determining a power parameter provided by embodiments of the present invention, which is performed by a network device. As shown in FIG. 6, the method for determining the power parameter includes the following step.

In S601, power control information of a physical uplink shared channel (PUSCH) is sent to a terminal device, in which the power control information is configured to determine a power adjustment value corresponding to a transmitting power of the PUSCH.

In the embodiments of the present invention, the network device may send the power control information of the PUSCH to the terminal device, and the power control information is configured to determine the power adjustment value corresponding to the transmitting power of the PUSCH.

Optionally, the PUSCH is a PUSCH for a configure grant small data transmission (CG-SDT).

Optionally, the power control information includes at least one selected from: signal information configured to calculate a path loss compensation power value; configuration information of an initial power component value; indication information of whether to allow a cumulative power adjustment; and configuration information of a dynamic power added value.

Optionally, the signal information configured to calculate the path loss compensation power value includes at least one selected from: a synchronous signal block (SSB); a reference signal associated with the PUSCH; and a reference signal having a quasi-colocation (QCL) relationship with the PUSCH.

In an implementation manner, the signal information configured to calculate the path loss compensation power value includes the SSB. For example, the network device may configure the SSB for the terminal device, and the SSB is configured to measure a path loss value, which may be configured to calculate the path loss compensation power value.

In an implementation manner, the signal information configured to calculate the path loss compensation power value includes the reference signal associated with the PUSCH. It can be understood that different PUSCHs may be associated with different reference signals, and the reference signals may be the SSBs. For example, as shown in FIG. 3, reference signals SSB-0, SSB-1, SSB-2, and SSB-3 are respectively associated with PUSCH-0, PUSCH-1, PUSCH-2, and PUSCH-3. When the terminal device uses the PUSCH-1 to transmit data, the SSB-1 associated with the PUSCH-1 is configured to measure the path loss value, and the path loss value may be configured to calculate the path loss compensation power value.

In an implementation manner, the signal information configured to calculate the path loss compensation power value includes the reference signal having the quasi-colocation relationship with the PUSCH. It can be understood that the different PUSCHs correspond to different reference signals in the quasi-colocation relationship, and the reference signals may be the SSBs. For example, still referring to FIG. 3, reference signals SSB-0, SSB-1, SSB-2, and SSB-3 respectively have quasi-colocation relationships with the PUSCH-0, the PUSCH-1, the PUSCH-2, and the PUSCH-3. When the terminal device uses the PUSCH-1 to send, the SSB-1 having the quasi-colocation relationship with the PUSCH-1 is configured to measure the path loss value, and the path loss value is configured to calculate the path loss compensation power value.

Optionally, the configuration information of the initial power component value includes at least one selected from: a configured nominal power component value; a configured terminal-specific power component value; a configured initial power component value; a nominal power component value used in a previous random access procedure; an initial power component value used in the previous random access procedure; a nominal power component value used in a current random access procedure; and an initial power component value used in the current random access procedure.

In an implementation manner, the network device sends a configuration signaling to the terminal device, and the configuration signaling is configured to configure at least one selected from the nominal power component value, the terminal-specific power component value, and the initial power component value, and thus the configuration signaling is configured to obtain the configuration information of the initial power component value.

In an implementation manner, the network device does not send the configuration signaling to the terminal device, and at this time the terminal device obtains at least one selected from the nominal power component value used in the previous random access procedure, the initial power component value used in the previous random access procedure, the nominal power component value used in the current random access procedure, and the initial power component value used in the current random access procedure as the configuration information of the initial power component value. It should be noted that, in the embodiments of the present invention, the random access procedure is not limited, for example, it includes, but not limited to, a 2-step random access channel (RACH), and a 4-step RACH.

Optionally, the indication information of whether to allow the cumulative power adjustment includes an indication bit, and the indication bit is configured to indicate that a cumulative power adjustment value or an absolute power adjustment value is adopted. For example, a size of the indication bit may be 1 bit. When the indication bit adopts a value of 0, it indicates that the cumulative power adjustment value is used, and when the indication bit adopts a value of 1, it indicates that the absolute power adjustment value is used.

Optionally, the indication information of whether to allow the cumulative power adjustment is indication information of allowing the cumulative power adjustment, and the indication information of allowing the cumulative power adjustment is configured to indicate that the cumulative power adjustment is configured for the PUSCH for the configure grant small data transmission (CG-SDT). In this way, the indication information of allowing the cumulative power adjustment may be defined to be configured to indicate that the cumulative power adjustment is configured for the PUSCH for the CG-SDT.

Optionally, the configuration information of the dynamic power added value includes at least one selected from: a power value added per time; and a maximum number of power additions.

Optionally, the determined power adjustment value corresponding to the transmitting power of the PUSCH includes at least one selected from: a path loss compensation power value; an initial power component value; a dynamic power adjustment value, the dynamic power adjustment value including an accumulated power value or an absolute power value; and a dynamic power added value.

In an implementation manner, the determined power adjustment value corresponding to the transmitting power of the PUSCH includes the path loss compensation power value. At this time, the power control information includes the signal information configured to calculate the path loss compensation power value, and the path loss compensation power value may be determined according to the signal information configured to calculate the path loss compensation power value.

Optionally, the path loss compensation power value may be determined according to a path loss value measured by a reference signal corresponding to an identifier of a reference signal configured to calculate the path loss compensation power value. It can be understood that the reference signal configured to calculate the path loss compensation power value is configured to measure the path loss value, and the path loss value is configured to calculate the path loss compensation power value. An identifier may be preset for the reference signal configured to calculate the path loss compensation power value, and thus different reference signals configured to calculate the path loss compensation power values can be distinguished from each other. The identifier of the reference signal configured to calculate the path loss compensation power value includes at least one of: an SSB identifier; and a channel state information reference signal (CSI-RS) identifier.

Optionally, the path loss compensation power value is determined according to a product value of the path loss value (measured by the reference signal corresponding to the identifier of the reference signal configured to calculate the path loss compensation power value) and a path loss compensation factor. The path loss compensation factor may be set according to actual conditions, and is not limited herein.

In an implementation manner, the determined power adjustment value corresponding to the transmitting power of the PUSCH includes the initial power component value. At this time, the power control information includes the configuration information of the initial power component value, and the initial power component value may be determined according to the configuration information of the initial power component value. Optionally, the initial power component value is determined according to the initial power component value included in the configuration information of the initial power component value. Alternatively, the initial power component value may be determined according to a sum value of the nominal power component value and the terminal-specific power component value included in the configuration information of the initial power component value.

In an implementation manner, the determined power adjustment value corresponding to the transmitting power of the PUSCH includes the dynamic power adjustment value, and the dynamic power adjustment value includes the accumulated power value or the absolute power value. At this time, the power control information includes the indication information of whether to allow a cumulative power adjustment, and the dynamic power adjustment value may be determined according to the indication information of whether to allow the cumulative power adjustment.

Optionally, when the dynamic power adjustment value is the absolute power value, the absolute power value is determined according to a transmit power control (TPC) command of a network device. It can be understood that the network device may send the TPC command to the terminal device, and the TPC command is configured to determine the absolute power value. For example, the TPC command may carry the indication information of the absolute power value, and the indication information includes, but is not limited to, an adjustment value of the absolute power value, and the absolute power value may be determined according to the adjustment value of the absolute power value included in the TPC command.

Optionally, when the dynamic power adjustment value is the accumulated power value, the accumulated power value may be determined according to a sum value of a dynamic power adjustment value of a previous transmission and an absolute power value of a current transmission.

Optionally, the terminal device satisfies a first preset condition, and the dynamic power adjustment value is a value after performing a rollback process. The dynamic power adjustment value being the value after performing the rollback process refers to that a dynamic power adjustment value of a current transmission is a dynamic power adjustment value of the previous transmission. The first preset condition may be set according to the actual conditions. For example, the first preset condition includes at least one selected from: receiving a connection release message; receiving a connection refused message; receiving indication information of entering an idle state; and receiving feedback information of successfully receiving data sent by the network device. Therefore, the dynamic power adjustment value is the value after performing the rollback process when the terminal device satisfies the first preset condition.

Optionally, the terminal device satisfies the first preset condition, and the dynamic power adjustment value is a value after performing an initialization process. The dynamic power adjustment value being the value after performing the initialization process refers to that a dynamic power adjustment value of a current transmission is an initial value. The initial value may be set according to the actual conditions, for example, may be set to 0. Therefore, the dynamic power adjustment value is the value after performing the initialization process when the terminal device satisfies the first preset condition.

In an implementation manner, the determined power adjustment value corresponding to the transmitting power of the PUSCH includes the dynamic power added value. At this time, the power control information includes the configuration information of the dynamic power added value, and the dynamic power added value may be determined according to the configuration information of the dynamic power added value.

Optionally, the dynamic power added value is determined according to a product of the power value added per time and the number of the power additions.

Optionally, the dynamic power added value is determined when the terminal device satisfies a second preset condition. Therefore, the method may only determine the dynamic power added value when the terminal device satisfies the second preset condition, and at this time, the power adjustment value corresponding to the transmitting power of the PUSCH includes the dynamic power added value. Otherwise, when the second preset condition is not satisfied, the dynamic power added value is not determined, and at this time, the power adjustment value corresponding to the transmitting power of the PUSCH does not include the dynamic power added value.

The second preset condition may be set according to the actual conditions, for example, the second preset condition includes retransmitting transmitted data.

Optionally, retransmitting the transmitted data includes at least one selected from: retransmitting the transmitted data on a PUSCH with a same configure grant (CG) resource as a previous transmission; retransmitting the transmitted data by using a same hybrid automatic repeat request (HARQ) process as the previous transmission; and retransmitting the transmitted data by using the same HARQ process as the previous transmission on the PUSCH with the same CG resource as the previous transmission.

Optionally, when the terminal device satisfies a third preset condition, the dynamic power added value is a value after performing the rollback process. The dynamic power added value being the value after performing the rollback process refers to that a dynamic power added value of a current transmission is a dynamic power added value of a previous transmission. The third preset condition may be set according to the actual conditions, for example, the third preset condition includes at least one selected from: receiving a connection release message; receiving a connection refused message; receiving indication information of entering an idle state; and receiving feedback information of successfully receiving the data sent by the network device. Therefore, the dynamic power added value is the value after performing the rollback process when the terminal device satisfies the third preset condition.

Optionally, when the terminal device satisfies the third preset condition, the dynamic power added value is a value after performing the initialization process. The dynamic power added value being the value after performing the initialization process refers to that a dynamic power added value of a current transmission is an initial value. The initial value may be set according to the actual conditions, for example, may be set to 0. Therefore, the dynamic power added value is the value after performing the initialization process when the terminal device satisfies the third preset condition.

According to the method for determining the power parameter in the embodiments of the present invention, the power control information of the physical uplink shared channel (PUSCH) is sent to the terminal device, and the power control information is configured to determine the power adjustment value corresponding to the transmitting power of the PUSCH. Therefore, the network device may send the power control information of the PUSCH to the terminal device, and the power control information is configured to determine the power adjustment value corresponding to the transmitting power of the PUSCH, so that the terminal device may adjust the transmitting power of the PUSCH according to the power adjustment value corresponding to the transmitting power of the PUSCH. The transmitting power of the PUSCH may be flexibly and accurately adjusted, which improves the reliability of the transmission on the PUSCH of the terminal device, and reduces the power consumption of the terminal device.

In the above embodiments provided by the present invention, the methods provided in the embodiments of the present invention are introduced from perspectives of the network device and the terminal device respectively. In order to implement the various functions in the methods provided by the above embodiments of the present invention, the network device and the terminal device may include a hardware structure and a software module, and implement the above functions in a form of the hardware structure, the software module, or a combination of the hardware structure and the software module. A certain function among the above mentioned functions may be implemented in the form of the hardware structure, the software module, or the combination of the hardware structure and the software module.

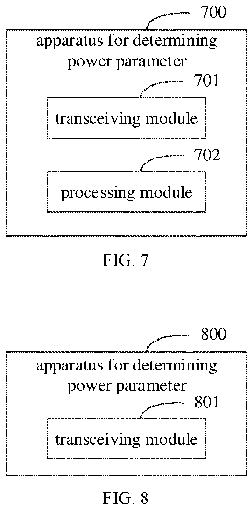

FIG. 7 is a schematic diagram of an apparatus for determining a power parameter provided by embodiments of the present invention. As shown in FIG. 7, the apparatus 700 for determining the power parameter includes a transceiving module 701 and a processing module 702. The transceiving module 701 is configured to obtain power control information of a physical uplink shared channel (PUSCH). The processing module 702 is configured to determine a power adjustment value corresponding to a transmitting power of the PUSCH according to the power control information.

In an implementation manner, the transceiving module 701 is specifically configured to: receive the power control information of the PUSCH sent by a network device; or obtain the power control information of the PUSCH according to a protocol agreement.

In an implementation manner, the PUSCH is a PUSCH for a configure grant small data transmission.

In an implementation manner, the power control information includes at least one selected from: signal information configured to calculate a path loss compensation power value; configuration information of an initial power component value; indication information of whether to allow a cumulative power adjustment; and configuration information of a dynamic power added value.

In an implementation manner, the power adjustment value includes at least one selected from: a path loss compensation power value; an initial power component value; a dynamic power adjustment value, the dynamic power adjustment value including an accumulated power value or an absolute power value; and a dynamic power added value.

In an implementation manner, the signal information configured to calculate the path loss compensation power value includes at least one selected from: a synchronous signal block (SSB); a reference signal associated with the PUSCH; and a reference signal having a quasi-colocation relationship with the PUSCH.

In an implementation manner, the configuration information of the initial power component value includes at least one selected from: a nominal power component value configured by the network device; a terminal-specific power component value configured by the network device; an initial power component value configured by the network device; a nominal power component value used in a previous random access procedure; an initial power component value used in the previous random access procedure; a nominal power component value used in a current random access procedure; and an initial power component value used in the current random access procedure.

In an implementation manner, the indication information of whether to allow the cumulative power adjustment includes: an indication bit configured to indicate that a cumulative power adjustment value or an absolute power adjustment value is adopted.

In an implementation manner, the configuration information of the dynamic power added value includes at least one selected from: a power value added per time; and a maximum number of power additions.

In an implementation manner, the indication information of whether to allow the cumulative power adjustment is indication information of allowing the cumulative power adjustment, and the indication information of allowing the cumulative power adjustment is configured to indicate that the cumulative power adjustment is configured for the PUSCH for the configure grant small data transmission.

In an implementation manner, the processing module 702 is specifically configured to: determine the path loss compensation power value according to a path loss value measured with a reference signal corresponding to an identifier of a reference signal configured to calculate the path loss compensation power value.

In an implementation manner, the processing module 702 is specifically configured to: determine the absolute power value according to a transmission power control (TPC) command of the network device.

In an implementation manner, the processing module 702 is specifically configured to: determine the accumulated power value according to a sum value of a dynamic power adjustment value of a previous transmission and an absolute power value of a current transmission.

In an implementation manner, the processing module 702 is specifically configured to: perform a rollback process on the dynamic power adjustment value when a first preset condition is satisfied.

In an implementation manner, the first preset condition includes at least one selected from: receiving a connection release message; receiving a connection refused message; receiving indication information of entering an idle state; and receiving feedback information of successfully receiving data sent by the network device.

In an implementation manner, the processing module 702 is specifically configured to: determine the dynamic power added value according to a product of the power value added per time and a number of the power additions.

In an implementation manner, the processing module 702 is specifically configured to: determine the dynamic power added value when a second preset condition is satisfied.

In an implementation manner, the second preset condition includes retransmitting transmitted data.

In an implementation manner, retransmitting the transmitted data includes at least one selected from: retransmitting the transmitted data on a PUSCH with a same configure grant (CG) resource as a previous transmission; retransmitting the transmitted data by using a same hybrid automatic repeat request (HARQ) process as the previous transmission; and retransmitting the transmitted data by using the same HARQ process as the previous transmission on the PUSCH with the same CG resource as the previous transmission.

In an implementation manner, the processing module 702 is specifically configured to: perform the rollback process on the dynamic power added value when a third preset condition is satisfied.

In an implementation manner, the third preset condition includes at least one of: receiving the connection release message; receiving the connection refused message; receiving the indication information to enter the idle state; and receiving the feedback information of successfully receiving data sent by the network device.

The apparatus for determining the power parameter provided by the present invention obtains the power control information of the PUSCH, and determines the power adjustment value corresponding to the transmitting power of the PUSCH according to the power control information. Therefore, the terminal device may determine the power adjustment value corresponding to the transmitting power of the PUSCH according to the power control information, and thus the transmitting power of the PUSCH may be adjusted according to the power adjustment value corresponding to the transmitting power of the PUSCH. The transmitting power of the PUSCH may be flexibly and accurately adjusted, which improves the reliability of the transmission on the PUSCH of the terminal device, and reduces the power consumption of the terminal device.

FIG. 8 is a schematic diagram of an apparatus for determining a power parameter provided by further embodiments of the present invention. As shown in FIG. 8, the apparatus 800 for determining the power parameter includes a transceiving module 801. The transceiving module 801 is configured to send power control information of a physical uplink shared channel (PUSCH) to a terminal device, in which the power control information is configured to determine a power adjustment value corresponding to a transmitting power of the PUSCH.

In an implementation manner, the PUSCH is a PUSCH for a configure grant small data transmission.

In an implementation manner, the power control information includes at least one selected from: signal information configured to calculate a path loss compensation power value; configuration information of an initial power component value; indication information of whether to allow a cumulative power adjustment; and configuration information of a dynamic power added value.

In an implementation manner, the power adjustment value includes at least one selected from: a path loss compensation power value; an initial power component value; a dynamic power adjustment value, the dynamic power adjustment value including an accumulated power value or an absolute power value; and a dynamic power added value.

In an implementation manner, the signal information configured to calculate the path loss compensation power value includes at least one selected from: a synchronous signal block (SSB); a reference signal associated with the PUSCH; and a reference signal having a quasi-colocation relationship with the PUSCH.

In an implementation manner, the configuration information of the initial power component value includes at least one selected from: a configured nominal power component value; a configured terminal-specific power component value; a configured initial power component value; a nominal power component value used in a previous random access procedure; an initial power component value used in the previous random access procedure; a nominal power component value used in a current random access procedure; and an initial power component value used in the current random access procedure.

In an implementation manner, the indication information of whether to allow the cumulative power adjustment includes: an indication bit configured to indicate that a cumulative power adjustment value or an absolute power adjustment value is adopted.

In an implementation manner, the configuration information of the dynamic power added value includes at least one selected from: a power value added per time; and a maximum number of power additions.

In an implementation manner, the indication information of whether to allow the cumulative power adjustment is indication information of allowing the cumulative power adjustment, and the indication information of allowing the cumulative power adjustment is configured to indicate that the cumulative power adjustment is configured for the PUSCH for the configure grant small data transmission.

In an implementation manner, the path loss compensation power value is determined according to a path loss value measured with a reference signal corresponding to an identifier of a reference signal configured to calculate the path loss compensation power value.

In an implementation manner, the absolute power value is determined according to a transmission power control (TPC) command of the network device.

In an implementation manner, the accumulated power value is determined according to a sum value of a dynamic power adjustment value of a previous transmission and an absolute power value of a current transmission.

In an implementation manner, the terminal device satisfies a first preset condition, and the dynamic power adjustment value is a value after performing a rollback process.

In an implementation manner, the first preset condition includes at least one selected from: receiving a connection release message; receiving a connection refused message; receiving indication information of entering an idle state; and receiving feedback information of successfully receiving data sent by the network device.

In an implementation manner, the dynamic power added value is determined according to a product of the power value added per time and a number of the power additions.

In an implementation manner, the dynamic power added value is determined when the terminal device satisfies a second preset condition.

In an implementation manner, the second preset condition includes retransmitting transmitted data.

In an implementation manner, retransmitting the transmitted data includes at least one selected from: retransmitting the transmitted data on a PUSCH with a same configure grant (CG) resource as a previous transmission; retransmitting the transmitted data by using a same hybrid automatic repeat request (HARQ) process as the previous transmission; and retransmitting the transmitted data by using the same HARQ process as the previous transmission on the PUSCH with the same CG resource as the previous transmission.

In an implementation manner, the terminal device satisfies a third preset condition, and the dynamic power added value is a value after performing a rollback process.

In an implementation manner, the third preset condition includes at least one selected from: receiving a connection release message; receiving a connection refused message; receiving indication information of entering an idle state; and receiving feedback information of successfully receiving data sent by the network device.

The apparatus for determining the power parameter provided by the present invention sends the power control information of the PUSCH to the terminal device, and the power control information is configured to determine the power adjustment value corresponding to the transmitting power of the PUSCH. Therefore, the network device may send the power control information of the PUSCH to the terminal device, and the power control information is configured to determine the power adjustment value corresponding to the transmitting power of the PUSCH, and the terminal device may adjust the transmitting power of the PUSCH according to the power adjustment value corresponding to the transmitting power of the PUSCH. The transmitting power of the PUSCH may be flexibly and accurately adjusted, which improves the reliability of the transmission on the PUSCH of the terminal device, and reduces the power consumption of the terminal device.

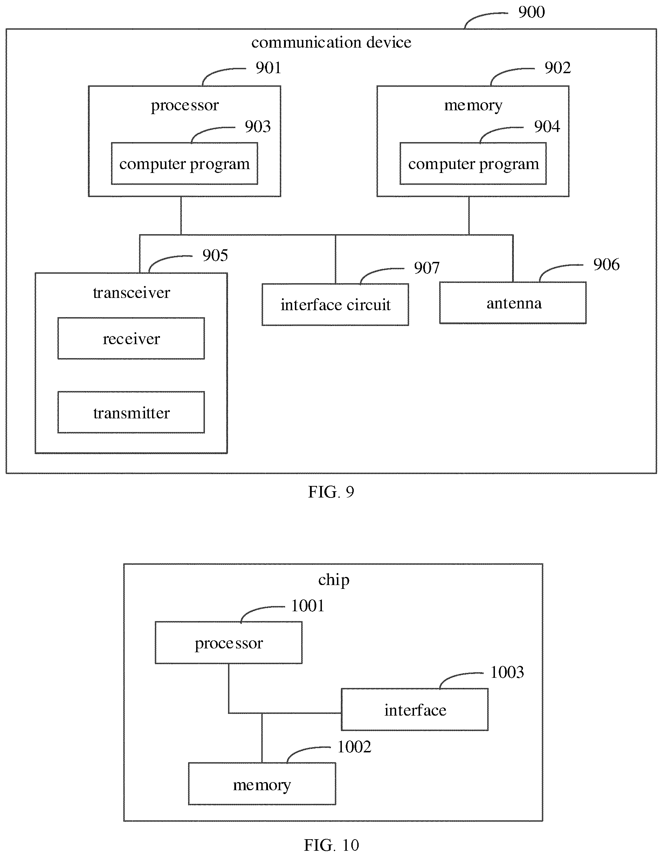

FIG. 9 is a block diagram of a communication device 900 provided by embodiments of the present invention. The communication device 900 may be a network device or a terminal device, and it is also possible to be a chip, a chip system, or a processor that supports the network device to implement the above method, or to be a chip, a chip system, or a processor that supports the terminal device to implement the above method. The device may be configured to implement the method as described in the above method embodiments, and for details, reference may be made to the descriptions in the above method embodiments.

The communications device 900 may include one or more processors 901. The processor 901 may be a general-purpose processor or a special-purpose processor. For example, it may be a baseband processor or a central processing unit. The baseband processor may be configured to process a communication protocol and communication data, and the central processing unit may be configured to control a communication device (such as a base station, a baseband chip, a terminal device, a terminal device chip, a DU or a CU, etc.) to execute computer programs, and to process data of computer programs.

Optionally, the communication device 900 may further include one or more memories 902 having stored therein a computer program 904. The processor 901 executes the computer program 904, to cause the communication device 900 to implement the method as described in the above method embodiments. Optionally, the memory 902 may have stored therein data. The communication device 900 and the memory 902 may be set separately or integrated together.

Optionally, the communication device 900 further includes a transceiver 905 and an antenna 906. The transceiver 905 may be called a transceiving element, a transceiving machine, a transceiving circuit or the like, for implementing a transceiving function. The transceiver 905 may include a receiver and a transmitter. The receiver may be called a receiving machine, a receiving circuit or the like, for implementing a receiving function. The transmitter may be called a transmitting machine, a transmitting circuit or the like for implementing a transmitting function.

Optionally, the communication device 900 further includes one or more interface circuits 907. The interface circuit 907 is configured to receive code instructions and transmit the code instructions to the processor 901. The processor 901 runs the code instructions to enable the communication device 900 to execute the methods as described in the foregoing method embodiments.

The communication device 900 is the terminal device. The processor 901 is configured to execute the step S202 in FIG. 2, and the step S402 in FIG. 4, and the transceiver 905 is configured to execute the step S201 in FIG. 2, and the step S401 in FIG. 4.

The communication device 900 is the network device. The transceiver 905 is configured to execute the step S601 in FIG. 6.

In an implementation manner, the processor 901 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation manner, the processor 901 may has stored therein a computer program 903 that, when run on the processor 901, causes the communication device 900 to implement the method as described in the foregoing method embodiments. The computer program 903 may be solidified in the processor 901, and in this case, the processor 901 may be implemented by a hardware.

In an implementation manner, the communication device 900 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), or an electronic device. The processor and the transceiver may also be manufactured by using various IC process technologies, such as a complementary metal oxide semiconductor (CMOS), a N-type Metal-oxide-semiconductor (NMOS), a positive channel metal oxide semiconductor (PMOS), a bipolar junction transistor (BJT), a bipolar CMOS (BiCMOS), silicon germanium (SiGe), and gallium arsenide (GaAs).

The communication device described in the above embodiments may be the network device or the terminal device, but the scope of the communication device described in the present invention is not limited thereto, and a structure of the communication device is not limited by FIG. 9. The communication device may be a stand-alone device or may be a part of a large device. For example, the communication device may be:
(1) a stand-alone integrated circuit (IC), or a chip, or a chip system or a subsystem;
(2) a set of one or more ICs, optionally, the set of ICs may further include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld machine, a mobile unit, a vehicle device, a network device, a cloud device, or an artificial intelligence device; or
(6) others.

For the case where the communication device may be a chip or a chip system, reference may be made to a schematic diagram of the chip shown in FIG. 10. The chip shown in FIG. 10 includes a processor 1001 and an interface 1002. In the chip, one or more processors 1001 may be provided, and more than one interface 1002 may be provided.

For a case where the chip is configured to implement functions of the terminal device in the embodiments of the present invention, the interface 1002 is configured to execute the step S201 in FIG. 2, and the step S401 in FIG. 4.

For a case where the chip is configured to implement functions of the network device in the embodiments of the present invention, the interface 1002 is configured to execute the step S601 in FIG. 6.

Optionally, the chip further includes a memory 1003 for storing necessary computer programs and data.

Those skilled in the art may understand that various illustrative logical blocks and steps listed in the embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such implementations should not be understood as beyond the protection scope of the embodiments of the present invention.

Embodiments of the present invention further provide a communication system. The system includes a communication device served as a terminal device (such as the terminal device described in any of the above method embodiments) and a communication device served as the network device as described in any of the aforementioned embodiments, or the system includes a communication device served as the terminal device (such as the terminal device described in any of the above method embodiments) and a communication device served as the network device as described in any of the aforementioned embodiments.

The present invention further provides a computer-readable storage medium having stored thereon instructions that, when executed by a computer, cause functions of any of the above method embodiments to be implemented.

The present invention further provides a computer program product that, when executed by a computer, causes functions of any of the above method embodiments to be implemented.

The above embodiments may be implemented in whole or in part by a software, a hardware, a firmware or any combination thereof. When implemented by using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website site, computer, server or data center in a wired manner (such as via a coaxial cable, an optical fiber, or a digital subscriber line (DSL)) or in a wireless manner (such as via infrared, wireless, or microwave). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)).

Those of ordinary skill in the art can understand that the first, second, and other numeral numbers involved in the present invention are only for convenience of description. They are not intended to limit the scope of the embodiments of the present invention, nor are they intended to represent sequential order.

The term "at least one" used in the present invention may be described as one or more, and the term "a plurality of' may cover two, three, four or more, which are not limited in the present invention. In the embodiments of the present invention, for a kind of technical features, the technical features in this kind are distinguished by terms like "first", "second", "third", "A", "B", "C" and "D", etc., and these technical features described with the "first", "second", "third", "A", "B", "C" and "D" do not show an order of priority and size.

The correspondence shown in each table in the present invention may be configured or predefined. Values of information in each table are just examples, and may be configured as other values, which are not limited in the present invention. When configuring a correspondence between the information and various parameters, it is not necessary to configure all the correspondences shown in the tables. For example, the correspondences shown in some rows of the tables in the present invention may not be configured. For another example, appropriate deformations or adjustments (such as splitting, and merging) can be made based on the above tables. The names of parameters shown in titles of the above tables may adopt other names understandable in the field of the communication device, and the values or representations of the parameters may be other values or representations understandable in the field of the communication device. When the above tables are implemented, other data structures may also be used, for example, arrays, queues, containers, stacks, linear tables, pointers, linked lists, trees, graphs, structural body, classes, heaps, or hash tables may be used.

The term "preset" in the present invention may be understood as define, pre-define, store, pre-store, pre-negotiate, pre-configure, cure, or pre-fire.

Those of ordinary skill in the art may appreciate that units and algorithm steps of various examples described in conjunction with the embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementations should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for determining a power parameter, performed by a terminal device and comprising:
obtaining power control information of a physical uplink shared channel, PUSCH; and
determining a power adjustment value corresponding to a transmitting power of the PUSCH according to the power control information.

2. The method according to claim 1, wherein obtaining the power control information for the PUSCH comprises:
receiving the power control information of the PUSCH sent by a network device; or
obtaining the power control information of the PUSCH according to a protocol agreement.

3. The method according to claim 1 or 2, wherein the PUSCH is a PUSCH for a configure grant small data transmission.

4. The method according to claim 1 or 2, wherein the power control information comprises at least one selected from:
signal information configured to calculate a path loss compensation power value;
configuration information of an initial power component value;
indication information of whether to allow a cumulative power adjustment; and
configuration information of a dynamic power added value.

5. The method according to any one of claims 1 to 4, wherein the power adjustment value comprises at least one selected from:
a path loss compensation power value;
an initial power component value;
a dynamic power adjustment value, the dynamic power adjustment value comprising an accumulated power value or an absolute power value; and
a dynamic power added value.

6. The method according to claim 4 or 5, wherein the signal information configured to calculate the path loss compensation power value comprises at least one selected from:
a synchronous signal block, SSB;
a reference signal associated with the PUSCH; and
a reference signal having a quasi-colocation relationship with the PUSCH.

7. The method according to any one of claims 4 to 6, wherein the configuration information of the initial power component value comprises at least one selected from:
a nominal power component value configured by the network device;
a terminal-specific power component value configured by the network device;
an initial power component value configured by the network device;
a nominal power component value used in a previous random access procedure;
an initial power component value used in the previous random access procedure;
a nominal power component value used in a current random access procedure; and
an initial power component value used in the current random access procedure.

8. The method according to any one of claims 4 to 7, wherein the indication information of whether to allow the cumulative power adjustment comprises:
an indication bit configured to indicate that a cumulative power adjustment value or an absolute power adjustment value is adopted.

9. The method according to any one of claims 4 to 8, wherein the configuration information of the dynamic power added value comprises at least one selected from:
a power value added per time; and
a maximum number of power additions.

10. The method according to any one of claims 4 to 9, wherein the indication information of whether to allow the cumulative power adjustment is indication information of allowing the cumulative power adjustment, and the indication information of allowing the cumulative power adjustment is configured to indicate that the cumulative power adjustment is configured for the PUSCH for the configure grant small data transmission.

11. The method according to any one of claims 5 to 10, wherein determining the path loss compensation power value comprises:
determining the path loss compensation power value according to a path loss value measured with a reference signal corresponding to an identifier of a reference signal configured to calculate the path loss compensation power value.

12. The method according to any one of claims 5 to 11, wherein determining the absolute power value comprises:
determining the absolute power value according to a transmission power control, TPC, command of the network device.

13. The method according to claim 12, wherein determining the accumulated power value comprises:
determining the accumulated power value according to a sum value of a dynamic power adjustment value of a previous transmission and an absolute power value of a current transmission.

14. The method according to any one of claims 5 to 13, further comprising:
performing a rollback process on the dynamic power adjustment value when a first preset condition is satisfied.

15. The method according to claim 14, wherein the first preset condition comprises at least one selected from:
receiving a connection release message;
receiving a connection refused message;
receiving indication information of entering an idle state; and
receiving feedback information of successfully receiving data sent by the network device.

16. The method according to any one of claims 5 to 15, wherein determining the dynamic power added value comprises:
determining the dynamic power added value according to a product of the power value added per time and a number of the power additions.

17. The method according to any one of claims 5 to 16, further comprising:
determining the dynamic power added value when a second preset condition is satisfied.

18. The method according to claim 17, wherein the second preset condition comprises retransmitting transmitted data.

19. The method according to claim 18, wherein retransmitting the transmitted data comprises at least one selected from:
retransmitting the transmitted data on a PUSCH with a same configure grant, CG, resource as a previous transmission;
retransmitting the transmitted data by using a same hybrid automatic repeat request, HARQ, process as the previous transmission; and
retransmitting the transmitted data by using the same HARQ process as the previous transmission on the PUSCH with the same CG resource as the previous transmission.

20. The method according to any one of claims 17 to 19, further comprising:
performing a rollback process on the dynamic power added value when a third preset condition is satisfied.

21. The method according to claim 20, wherein the third preset condition comprises at least one selected from:
receiving a connection release message;
receiving a connection refused message;
receiving indication information of entering an idle state; and
receiving feedback information of successfully receiving data sent by the network device.

22. A method for determining a power parameter, performed by a network device and comprising:
sending power control information of a PUSCH to a terminal device, wherein the power control information is configured to determine a power adjustment value corresponding to a transmitting power of the PUSCH.

23. The method according to claim 22, wherein the power control information comprises at least one selected from:
signal information configured to calculate a path loss compensation power value;
configuration information of an initial power component value;
indication information of whether to allow a cumulative power adjustment; and
configuration information of a dynamic power added value.

24. The method according to claim 22 or 23, wherein the PUSCH is a PUSCH for a configure grant small data transmission.

25. The method according to claim 22 or 23, wherein the power adjustment value comprises at least one selected from:
a path loss compensation power value;
an initial power component value;
a dynamic power adjustment value, the dynamic power adjustment value comprising an accumulated power value or an absolute power value; and
a dynamic power added value.

26. The method according to claim 24 or 25, wherein the signal information configured to calculate the path loss compensation power value comprises at least one selected from:
an SSB;
a reference signal associated with the PUSCH; and
a reference signal having a quasi-colocation relationship with the PUSCH.

27. The method according to any one of claims 23 to 26, wherein the configuration information of the initial power component value comprises at least one selected from:
a configured nominal power component value;
a configured terminal-specific power component value;
a configured initial power component value;
a nominal power component value used in a previous random access procedure;
an initial power component value used in the previous random access procedure;
a nominal power component value used in a current random access procedure; and
an initial power component value used in the current random access procedure.

28. The method according to any one of claims 23 to 27, wherein the indication information of whether to allow the cumulative power adjustment comprises:
an indication bit configured to indicate that a cumulative power adjustment value or an absolute power adjustment value is adopted.

29. The method according to any one of claims 23 to 28, wherein the configuration information of the dynamic power added value comprises at least one selected from:
a power value added per time; and
a maximum number of power additions.

30. The method according to any one of claims 23 to 29, wherein the indication information of whether to allow the cumulative power adjustment is indication information of allowing the cumulative power adjustment, and the indication information of allowing the cumulative power adjustment is configured to indicate that the cumulative power adjustment is configured for the PUSCH for the configure grant small data transmission.

31. The method according to any one of claims 25 to 30, wherein the path loss compensation power value is determined according to a path loss value measured with a reference signal corresponding to an identifier of a reference signal configured to calculate the path loss compensation power value.

32. The method according to any one of claims 25 to 31, wherein the absolute power value is determined according to a TPC command of the network device.

33. The method according to claim 32, wherein the accumulated power value is determined according to a sum value of a dynamic power adjustment value of a previous transmission and an absolute power value of a current transmission.

34. The method according to any one of claims 25 to 33, wherein the terminal device satisfies a first preset condition, and the dynamic power adjustment value is a value after performing a rollback process.

35. The method according to claim 34, wherein the first preset condition comprises at least one selected from:
receiving a connection release message;
receiving a connection refused message;
receiving indication information of entering an idle state; and
receiving feedback information of successfully receiving data sent by the network device.

36. The method according to any one of claims 25 to 35, wherein the dynamic power added value is determined according to a product of the power value added per time and a number of the power additions.

37. The method according to any one of claims 25 to 36, wherein the dynamic power added value is determined when the terminal device satisfies a second preset condition.

38. The method according to claim 37, wherein the second preset condition comprises retransmitting transmitted data.

39. The method according to claim 38, wherein retransmitting the transmitted data comprises at least one selected from:
retransmitting the transmitted data on a PUSCH with a same CG resource as a previous transmission;
retransmitting the transmitted data by using a same HARQ process as the previous transmission; and
retransmitting the transmitted data by using the same HARQ process as the previous transmission on the PUSCH with the same CG resource as the previous transmission.

40. The method according to any one of claims 37 to 39, wherein the terminal device satisfies a third preset condition, and the dynamic power added value is a value after performing a rollback process.

41. The method according to claim 40, wherein the third preset condition comprises at least one selected from:
receiving a connection release message;
receiving a connection refused message;
receiving indication information of entering the idle state; and
receiving feedback information of successfully receiving data sent by the network device.

42. An apparatus for determining a power parameter, comprising:
a transceiving module configured to obtain power control information of a PUSCH; and
a processing module configured to determine a power adjustment value corresponding to a transmitting power of the PUSCH according to the power control information.

43. An apparatus for determining a power parameter, comprising:
a transceiving module configured to send power control information of a PUSCH to a terminal device, wherein the power control information is configured to determine a power adjustment value corresponding to a transmitting power of the PUSCH.

44. A communication device, comprising:
a processor, and
a memory for storing a computer program,
wherein the processor is configured to execute the computer program stored in the memory, to cause the communication device to implement the method according to any one of claims 1 to 21.

45. A communication device, comprising:
a processor, and
a memory for storing a computer program,
wherein the processor is configured to execute the computer program stored in the memory, to cause the communication device to implement the method according to any one of claims 22 to 41.

46. A communication device, comprising a processor and an interface circuit,
wherein the interface circuit is configured to receive code instructions and transmit them to the processor; and
the processor is configured to run the code instructions to implement the method according to any one of claims 1 to 21.

47. A communication device, comprising a processor and an interface circuit,
wherein the interface circuit is configured to receive code instructions and transmit them to the processor; and
the processor is configured to run the code instructions to implement the method according to any one of claims 22 to 41.

48. A computer-readable storage medium for storing instructions that, when executed, cause the method according to any one of claims 1 to 21 to be implemented.

49. A computer-readable storage medium for storing instructions that, when executed, cause the method according to any one of claims 22 to 41 to be implemented.
